# EUROPÄISCHE PATENTANMELDUNG

(11) **EP 0 965 258 A1**
(43) Veröffentlichungstag der Anmeldung: **22.12.1999**
(21) Anmeldenummer: 99110729.3
(22) Anmeldetag: 04.06.1999
(51) Int. Cl.: A01D 34/66

(54) **Mähmaschine**

(30) Priorität: 18.06.1998 DE 19827072
(71) Anmelder: Maschinenfabriken Bernard Krone GmbH, D-48480 Spelle (DE)
(72) Erfinder: Krone, Bernard Dr.-Ing. E.h., 48480 Spelle (DE); Horstmann, Josef Dr.-Ing., 49479 Ibbenbüren (DE)

(57) **Zusammenfassung**

Mähmaschine, insbesondere ein Scheibenmähwerk mit einer Mäheinrichtung (1), die aus zumindest zwei auf einem Mähholm angebrachten, um eine in etwa vertikale Achse (7) rotierenden und an ihrem Umfang mit Schneidwerkzeugen (6) besetzten Schneidorganen (4) besteht, wobei benachbarte Schneidorgane (4) bezüglich der Anordnung der Schneidwerkzeuge (6) um einen vorgegebenen Drehwinkel gegeneinander versetzt sind und die Schneidwerkzeuge (6) benachbarter Schneidorgane (4) sich überschneidende Bahnen beschreiben, mit einer um die in etwa vertikale Achse (7) im Mähholm drehbar gelagerten Welle zur Lagerung und zum Antrieb eines jeden Schneidorganes (4), wobei jedem Schneidorgan (4) ein Antriebsorgan (8) zugeordnet ist, welches mit zumindest einem Antriebsorgan (8) eines benachbarten Schneidorganes (4) unmittelbar in Eingriff steht.

## Beschreibung

Die vorliegende Erfindung bezieht sich auf eine Mähmaschine, insbesondere ein Scheibenmähwerk gemäß dem Oberbegriff des Anspruchs 1. Derartige Mähmaschinen sind für sich bekannt und werden hauptsächlich beim Ernten von Gras oder dgl. Erntegüter eingesetzt. Im Betrieb können sie beispielsweise an eine Anhängevorrichtung eines landwirtschaftlichen Ackerschleppers oder dgl. Zugmaschinen angehängt werden, wobei ihre rotierenden Schneidorgane von der Zapfwelle des landwirtschaftlichen Ackerschleppers aus antreibbar sind.

In der eigenen, älteren DE 31 27 078 C2 ist eine Scheibenmähmaschine offenbart, deren Mähholm als Kastenträger ausgebildet ist und nebeneinander angeordnete, miteinander in Eingriff stehende und gegenläufig angetriebene Zahnräder enthält. Über eine in etwa vertikal ausgerichtete und in einem Lagergehäuse gelagerte Welle ist jeder Messerträger mit dem Kastenträger verbunden und wird über ein an der Unterseite der vertikal ausgerichteten Welle innerhalb des Kastenträgers angeordnetes Ritzel angetrieben, welches je nach gewünschter Drehrichtung der Messerträger mit einem der Zahnräder im Eingriff steht. Ein Mangel der vorstehend beschriebenen Scheibenmähmaschine ist in der aufwendigen konstruktiven Ausbildung des Antriebes der Messerträger zu sehen. Dadurch weisen derartig ausgebildete Mähholme ein relativ großes Gewicht auf und deren Herstellung ist mit hohen Kosten verbunden. Desweiteren ergibt sich an jeder Übersetzungsstufe zwischen zwei miteinander in Eingriff stehenden Zahnrädern oder Ritzel beispielsweise durch das Wälzgleiten der Zahnflanken oder durch Lagerreibung ein Leistungsverlust (Minderung der Antriebsleistung). Da zur Überbrückung der Abstände zwischen den jeweiligen Messerträgern eine Vielzahl von Zwischenräder zur Übertragung des Antriebsmomentes notwendig sind, kann die Summe der an jeder Übersetzungsstufe auftretende Leistungsverluste bei den in der heutigen Zeit üblichen großen Arbeitsbreiten der Scheibenmähmaschinen nicht mehr vernachlässigt werden.

Aufgabe der vorliegenden Erfindung ist es daher, eine Mähmaschine, insbesondere ein Scheibenmähwerk der vorstehend genannten Art zu schaffen, dessen Mäheinrichtung einen möglichst flachen, konstruktiv einfachen und somit kostengünstigen Aufbau aufweist. Weiterhin soll die beim Antrieb der Schneidorgane der Mäheinrichtung entstehende Minderung der Antriebsleistung möglichst gering gehalten werden.

Zur Lösung der gestellten Aufgabe zeichnet sich die Mähmaschine der vorstehend genannten Art durch die im kennzeichnenden Teil des Anspruches 1 angegebenen Merkmale aus. Hinsichtlich der weiteren Ausgestaltung der Erfindung wird auf die Ansprüche 2 bis 14 verwiesen.

Eine Mäheinrichtung einer Mähmaschine, insbesondere eines Scheibenmähwerkes mit den erfindungsgemäßen Merkmalen zeichnet sich durch einen Aufbau aus, bei dem jedem oberhalb von einem Mähholm angebrachten Schneidorgan ein innerhalb des Mähholmes angeordnetes Antriebsorgan zugeordnet ist, welches sich mit zumindest einem Antriebsorgan eines benachbarten Schneidorganes unmittelbar kämmend im Eingriff befindet, so daß von diesem Antriebsorgan ein Antrieb benachbarter Antriebsorgane ausgeht oder daß von benachbarten Antriebsorganen ein Antrieb des besagten Antriebsorganes erfolgt. Dadurch ergibt sich innerhalb des Mähholmes der Mäheinrichtung ein Antriebstrang, der aus als Zahnräder ausgeführten Antriebsorganen gebildet ist und ohne Zwischenräder auskommt, so daß ohne Übersetzungsstufen zwischen den Antriebsorganen ein Antrieb aller Schneidorgane der Mäheinrichtung erreichbar ist. Neben einem einfachen, leichten und somit kostengünstigen Aufbau zeichnet sich die Mäheinrichtung auch noch durch eine deutliche Reduzierung der Verlustleistung (Minderung der Antriebsleistung durch Wirkungsgrade bei der Übertragung von Drehmomenten zwischen zwei Antriebsorganen) beim Mäheinsatz aus.

Eine vorteilhafte Ausführungsform der Erfindung geht davon aus, den Mähholm der Mäheinrichtung als einen sogenannten "Einweg-Mähholm" auszubilden. Dazu ist es vorgesehen, das jeden Schneidorgan zugeordnete Antriebsorgan sowie die Welle zur Lagerung des Schneidorganes gegenüber dem Mähholm als ein Bauteil auszuführen oder das Antriebsorgan und die Welle über eine unlösbare Verbindung, vorzugsweise über eine Schweißverbindung miteinander zu verbinden. Dadurch ist es nicht mehr erforderlich, ein die Antriebsorgane umgebendes und den Mähholm bildendes Gehäuse mit einem kostspieligen Zugang zu den Antriebsorganen, beispielsweise mit dem Ziel einer Demontage der Antriebsorgane zu versehen. Denn aufgrund der Verwendung von einer Abscherkupplung als Verbindungselement zwischen jedem Schneidorgan und der das Schneidorgan tragenden Welle außerhalb des den Mähholm bildenden Gehäuses ist beispielsweise eine praxisreife Ausführung auf dem Markt, durch die Zahnbrüche oder dgl. Beschädigungen an den Antriebsorganen praktisch nicht mehr vorkommen und somit eine Veranlassung zu einer Demontage der Antriebsorgane nicht mehr gegeben ist. Ein derartiges Gehäuse besteht beispielsweise aus einem oberen und einem unteren Abschnitt, wobei beide Abschnitte schmiermitteldicht miteinander verschweißt sind und der obere Abschnitt lediglich Öffnungen aufweist, die der Aufnahme von Lagergehäusen zur Lagerung der die Schneidorgane tragenden Wellen dient.

In einer Weiterbildung der Erfindung ist es aber auch vorstellbar, die Antriebsorgane über formschlüssige, lösbare Verbindungen, vorzugsweise über Kerbverzahnungen mit den die Schneidorgane tragenden Wellen zu verbinden. In diesem Fall ist das die Antriebsorgane umgebende Gehäuse so ausgebildet, daß ein Zugang zu den Antriebsorganen dadurch ermöglicht wird, daß eine in bezüglich der Fahrt- und Arbeitrichtung hinteren Bereich des Mähholmes zwischen dem oberen und dem unteren Abschnitt des Gehäuse angeordnete und über Schrauben arretierbare Leiste entfernt werden kann.

Gemäß einem weiteren Aspekt der Erfindung ist es vorgesehen, die Antriebsorgane als Zahnräder auszubilden, die kämmend miteinander in Eingriff stehen. Dadurch daß jedem Schneidorgan ein Zahnrad zugeordnet ist, das mit dem Zahnrad zumindest eines benachbarten Schneidorganes in Eingriff steht, nehmen die Zahnräder mit einem zumindest annähernd dem Achsabstand zweier benachbarter Schneidorgane entsprechenden Achsabstand ein relativ großen Teilkreisdurchmesser an. Somit werden in vorteilhafter Weise die von den Zahnräder zu übertragenden Umfangskräfte klein gehalten. In einer vorteilhaften Ausführungsform ist es denkbar, die Zahnräder aus einem schweißbaren Stahl herzustellen, wobei die Zahnräder in ihrem Stegbereich Löcher zur Gewichtsreduzierung aufweisen. In einer Weiterbildung ist es aber auch vorstellbar, die Zahnräder aus einem hochbeanspruchbaren Kunststoff herzustellen, so daß dadurch ebenfalls das Gewicht des Mähholmes und die Geräuschabstrahlung im Einsatz positiv beeinflußt wird.

Eine detaillierte Beschreibung des Gegenstandes der Erfindung erfolgt nun anhand von Ausführungsbeispielen. In der Zeichnung stellt im einzelnen dar:
- Fig.1: eine teilweise abgebrochen dargestellte Draufsicht eines erfindungsgemäßen Scheibenmähwerkes;
- Fig.2: eine Schnittdarstellung eines Mähholmes gemäß Schnitt II - II in Fig.1;
- Fig.3: eine Schnittdarstellung eines weiteren Ausführungsbeispieles eines Mähholmes gemäß Schnitt II - II in Fig.1;

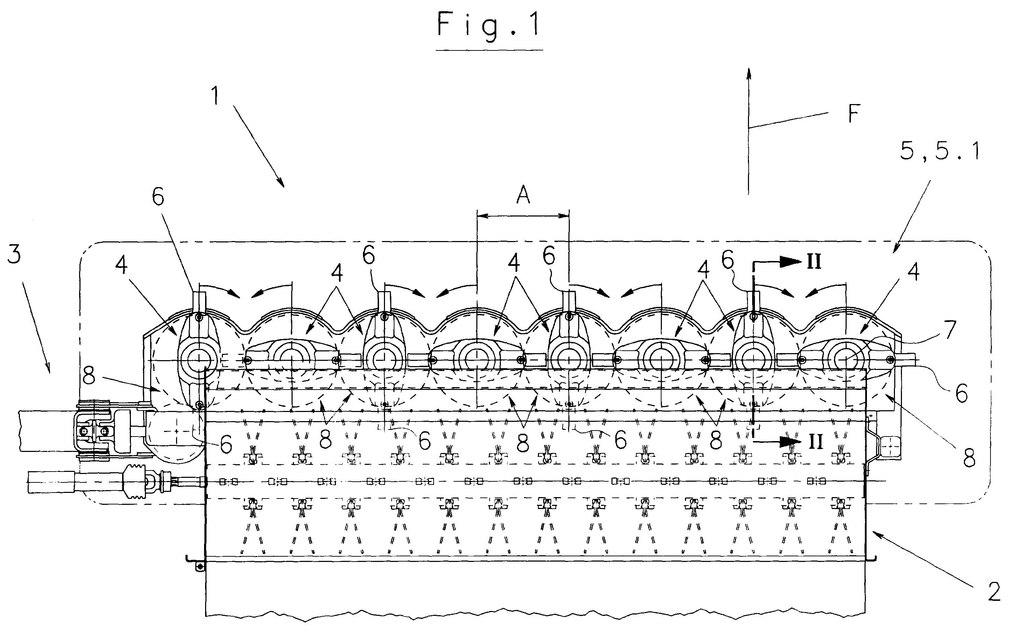

Eine mögliche Ausführungsform einer erfindungsgemäßen Mähmaschine, insbesondere eines Scheibenmähwerkes ist in Fig.1 in einer Arbeits- und Betriebsstellung näher veranschaulicht. Wie aus dieser Figur hervorgeht, besteht das Scheibenmähwerk im wesentlichen aus einer Mäheinrichtung 1 sowie einer dieser nachgeordneten Aufbereitungseinrichtung 2 und einer nur teilweise dargestellten Trageeinrichtung 3, die im dargestellten Ausführungsbeispiel zum Anbau an eine nicht dargestellte Dreipunkthubvorrichtung eines ebenfalls nicht dargestellten landwirtschaftlichen Ackerschleppers oder dgl. landwirtschaftliche Zugmaschine vorgesehen ist. Ein Antrieb des Scheibenmähwerkes kann beispielsweise von dem landwirtschaftlichen Ackerschlepper aus über eine Gelenkwelle oder dgl. Antriebselemente erfolgen. Im Rahmen der Erfindung kann aber auch eine Mähmaschine zugrunde gelegt sein, deren Mäheinrichtung an einem hinter dem landwirtschaftlichen Ackerschlepper gezogenen Fahrgestell aufgehängt ist oder in einer Kombination aus mehreren Mäheinrichtungen an einem selbstfahrenden Trägerfahrzeug angebracht ist.

Wie weiterhin aus der Fig.1 hervorgeht, besteht die Mäheinrichtung 1 aus Schneidorganen 4, die oberhalb von einem Mähholm 5,5.1 angeordnet und an ihrem Umfang mit zwei Schneidwerkzeugen 6 besetzt sind. Die Schneidorgane 4 sind dabei so auf dem Mähholm 5,5.1 angebracht, daß diese bezüglich ihrer Schneidwerkzeuge 6 einen Winkelversatz von 90 Grad zueinander aufweisen. Durch die Fliehkraft bei einer Drehbewegung der Schneidorgane 4 mit einer hohen Drehzahl um eine in etwa vertikale Achse 7 gelangen die Schneidwerkzeuge 6 in eine radial nach außen gerichtete, eine Schneidwirkung erzeugende Schneidstellung. Zum Antrieb ist jeden Schneidorgan 4 ein Antriebsorgan 8 zugeordnet, welches mit einem Antriebsorgan 8 zumindest eines benachbarten Schneidorganes 4 unmittelbar in Eingriff steht und so einen Antriebstrang bildet, durch den ohne eine Verwendung von Zwischenräder ein Antrieb aller Schneidorgane 4 erreichbar ist.

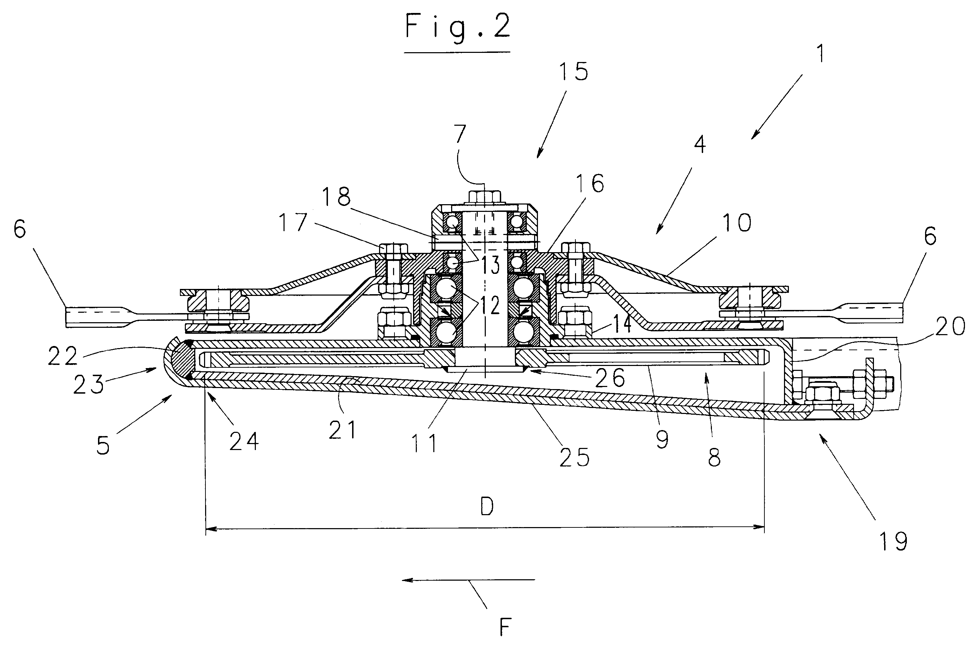

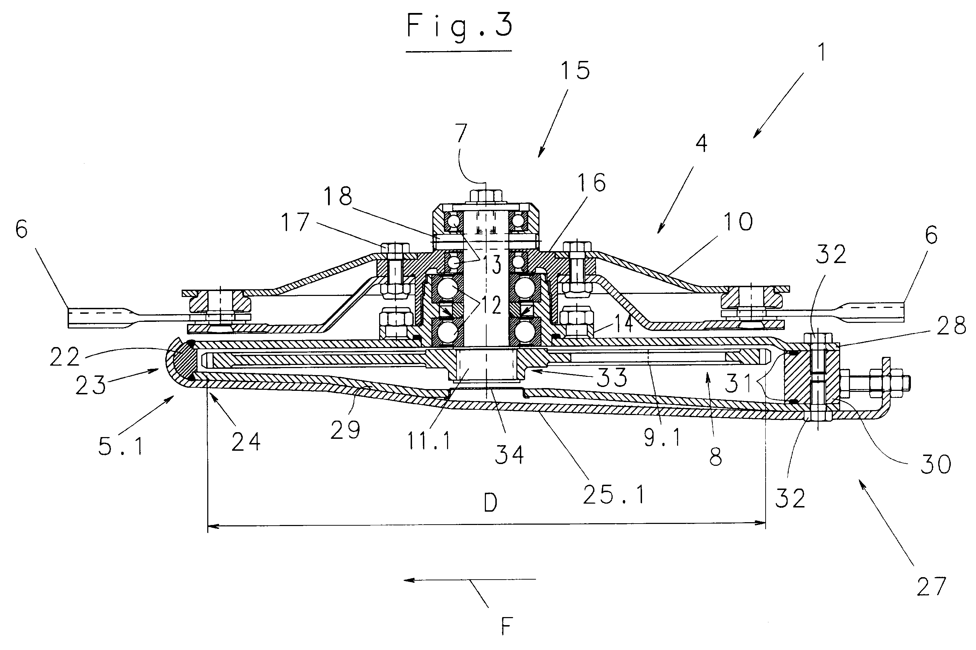

Wie aus der in Fig.2 und 3 wiedergegebenen Schnittdarstellung des Mähholmes 5,5.1 hervorgeht, ist das Antriebsorgan 8 als Zahnrad 9,9.1 ausgebildet, das einen Teilkreisdurchmesser D aufweist, der zumindest annähernd dem Achsabstand A (siehe Fig.1) zweier benachbarter Antriebsorgane 8 entspricht. Zur Verbindung des Zahnrades 9,9.1 mit dem als Mähteller 10 ausgebildeten Schneidorgan 4 ist eine Welle 11,11.1 vorgesehen, die über Wälzlager 12 in einem schraubbar mit dem Mähholm 5,5.1 verbundenen Lagergehäuse 14 gelagert ist. Im oberen Bereich der Welle 11,11.1 ist eine Abscherkupplung 15 zur Absicherung der im Mähholm 5,5.1 untergebrachten Antriebsorgane 8 gegen Überlast, beispielsweise beim Aufprall des Mähtellers 10 auf einen Stein oder dgl. Hindernisse angebracht, die der Verbindung des Mähtellers 10 mit der Welle 11,11.1 dient. Die Abscherkupplung 15 weist dazu eine Nabe 16 auf, die über Befestigungsschrauben 17 mit dem Mähteller 10 verschraubt ist und die mittels weiterer Wälzlager 13 gegenüber der Welle 11,11.1 gelagert ist. Als Verbindungselement zwischen der Nabe 16 und der Welle 11,11.1 ist ein Abscherelement 18 vorgesehen, das im dargestellten Ausführungsbeispiel als Spannhülse ausgebildet ist. Ergänzend zu den vorstehenden Ausführungen bezüglich der Abscherkupplung 15 wird auf eine eigene ältere DE 197 20 956.4 verwiesen.

Wie weiterhin aus der Fig.2 zu entnehmen ist, sind die Zahnräder 9 in einem den Mähholm 5 bildenden Gehäuse 19 untergebracht, das aus einen oberen Abschnitt 20 und einem unteren Abschnitt 21 besteht, wobei beide Abschnitte 20,21 schmiermitteldicht miteinander verschweißt sind. In den bezüglich der Fahrt- und Arbeitsrichtung F vorderen Bereich des Mähholmes 5 ist eine in Querschnitt etwa halbkreisförmig ausgebildete Leiste 22 vorgesehen, deren halbkreisförmige Kontur 23 in Fahrtund Arbeitsrichtung F gerichtet ist und an deren rückwärtiger Kontur 24 die vorderen Kanten des oberen Abschnittes 20 und des unteren Abschnittes 21 anliegen und mit dieser verschweißt sind. Die halbkreisförmige Kontur 23 der Leiste 22 dient der Aufnahme einer Gleitkufe 25, welche im hinteren Bereich des Mähholmes 5 mit dem unteren Abschnitt 21 des Gehäuses 19 verschraubt ist.

Bei dem in Fig.2 dargestellten Ausführungsbeispiel handelt es sich um eine mögliche Ausführungsform eines sogenannten "Einweg-Mähholmes", bei dem eine Demontage des Zahnrades 9 nicht mehr möglich ist. Deshalb ist es hierbei vorgesehen, die Welle 11 und das Zahnrad 9 unlösbar, beispielsweise über eine Schweißverbindung 26 miteinander zu verbinden. Dazu ist es erforderlich die Zahnräder 9 aus einem schweißbaren Stahl herzustellen. Es ist aber auch denkbar, die Welle 11 und das Zahnrad 9 als ein Bauteil, beispielsweise als ein Schmiedeteil auszuführen.

Eine Weiterbildung der Erfindung ist in Fig.3 dargestellt. Dabei umfaßt die Mäheinrichtung 1 einen Mähholm 5.1, der so ausgebildet ist, daß ein Zugang zu den als Zahnräder 9.1 ausgeführten Antriebsorganen 8 möglich ist. Die Zahnräder 9.1 sind dazu von einem Gehäuse 27 umgeben, dessen oberer Abschnitt 28 und dessen unterer Abschnitt 29 in dem bezüglich der Fahrt- und Arbeitsrichtung F vorderen Bereich mit der Leiste 22 schweißbar verbunden sind. Im hinteren Bereich des Gehäuses 27 ist eine Leiste 30 angeordnet, über die unter Verwendung von Dichtungen 31 und Schrauben 32 eine schmiermitteldichte Abdichtung des Gehäuses 27 erreichbar ist. Damit bei dem dargestellten Ausführungsbeispiel eine Demontage der Zahnräder 9.1 durchgeführt werden kann, ist die Welle 11.1 und das Zahnrad 9.1 lösbar, vorzugsweise über eine formschlüssige Verbindung 33 miteinander verbunden. Zur Demontage der Wellen 11.1 ist in dem unteren Abschnitt 29 des Gehäuses 27 ein Verschlußdeckel kel 34 vorgesehen. Wie bereits bei dem in Fig.2 veranschaulichten Ausführungsbeispiel beschrieben, dient auch in diesem Ausführungsbeispiel die Leiste 22 der Aufnahme einer Gleitkufe 25.1, die im hinteren Bereich des Mähholmes 5.1 mit dem Gehäuse 27 verschraubt ist.

## Patentansprüche

1. Mähmaschine, insbesondere ein Scheibenmähwerk mit einer Mäheinrichtung (1), die aus zumindest zwei auf einem Mähholm (5,5.1) angebrachten, um eine in etwa vertikale Achse (7) rotierenden und an ihrem Umfang mit Schneidwerkzeugen (6) besetzten Schneidorganen (4) besteht, wobei benachbarte Schneidorgane (4) bezüglich der Anordnung der Schneidwerkzeuge (6) um einen vorgegebenen Drehwinkel gegeneinander versetzt sind und die Schneidwerkzeuge (6) benachbarter Schneidorgane (4) sich überschneidende Bahnen beschreiben, mit einer um die in etwa vertikale Achse (7) im Mähholm (5,5.1) drehbar gelagerten Welle (11,11.1) zur Lagerung und zum Antrieb eines jeden Schneidorganes (4), **dadurch gekennzeichnet,** daß jedem Schneidorgan (4) ein Antriebsorgan (8) zugeordnet ist, welches mit zumindest einem Antriebsorgan (8) eines benachbarten Schneidorganes (4) unmittelbar in Eingriff steht.

2. Mähmaschine nach Anspruch 1, **dadurch gekennzeichnet**, daß das jedem Schneidorgan (4) zugeordnete Antriebsorgan (8) als Zahnrad (9,9.1) ausgebildet ist.

3. Mähmaschine nach Anspruch 1 und 2, **dadurch gekennzeichnet,** daß der Teilkreisdurchmesser (D) der Zahnräder (9,9.1) zumindest annähernd dem Achsabstand (A) zweier benachbarter Schneidorgane (4) entspricht.

4. Mähmaschine nach einem der Ansprüche 1 bis 3, **dadurch gekennzeichnet**, daß das jedem Schneidorgan (4) zugeordnete Antriebsorgan (8) und die Welle (11) als ein Bauteil ausgebildet sind.

5. Mähmaschine nach einem der Ansprüche 1 bis 4, **dadurch gekennzeichnet,** daß das jedem Schneidorgan (4) zugeordnete Antriebsorgan (8) unlösbar mit der Welle (11) verbunden ist.

6. Mähmaschine nach Anspruch 5, **dadurch gekennzeichnet,** daß das jedem Schneidorgan (4) zugeordnete Antriebsorgan (8) über eine Schweißverbindung (26) mit der Welle (11) verbunden ist.

7. Mähmaschine nach einem der Ansprüche 1 bis 3, **dadurch gekennzeichnet,** daß das jedem Schneidorgan (4) zugeordnete Antriebsorgan (8) lösbar mit der Welle (11.1) verbunden ist.

8. Mähmaschine nach Anspruch 7, **dadurch gekennzeichnet**, daß das jedem Schneidorgan (4) zugeordnete Antriebsorgan (8) über eine formschlüssige Verbindung (33) mit der Welle (11.1) verbunden ist.

9. Mähmaschine nach einem der Ansprüche 5 bis 8, **dadurch gekennzeichnet,** daß die Zahnräder (9,9.1) aus einem schweißbaren Stahl hergestellt sind.

10. Mähmaschine nach Anspruch 7 und 8, **dadurch gekennzeichnet**, daß die Zahnräder (9.1) aus einem hochbeanspruchbaren Kunststoff gebildet sind.

11. Mähmaschine nach einem der Ansprüche 1 bis 10, **dadurch gekennzeichnet,** daß die Antriebsorgane (8) der Schneidorgane (4) von einem den Mähholm (5) bildenden Gehäuse (19) umgeben sind, welches keinen Zugang zu den Antriebsorganen (8) zuläßt.

12. Mähmaschine nach Anspruch 11, **dadurch gekennzeichnet,** daß das Gehäuse (19) aus einem oberen Abschnitt (20) und einem unteren Abschnitt (21) gebildet ist, wobei beide Abschnitte (20,21) schmiermitteldicht miteinander verschweißt sind.

13. Mähmaschine nach einem der Ansprüche 1 bis 10**,** **dadurch gekennzeichnet**, daß die Antriebsorgane (8) der Schneidorgane (4) von einem den Mähholm (5.1) bildenden Gehäuse (27) umgeben sind, welches den Zugang zu den Antriebsorganen (8) zuläßt.

14. Mähmaschine nach Anspruche 13, **dadurch gekennzeichnet**, daß das Gehäuse (27) aus einem oberen Abschnitt (28) und einem unteren Abschnitt (29) besteht, wobei beide Abschnitte (28,29) in einem bezüglich der Fahrt- und Arbeitsrichtung (F) vorderen Bereich mittels einer Schweißverbindung und im hinteren Bereich des Mähholmes (5.1) über eine Leiste (30) und über Schrauben (32) miteinander verbunden sind.
